(19) Europäisches Patentamt
European Patent Office
Office européen des brevets

(11) **EP 4 585 429 B1**

(12) **EUROPEAN PATENT SPECIFICATION**

(45) Date of publication and mention
of the grant of the patent:
**28.01.2026 Bulletin 2026/05**

(21) Application number: 24223680.0

(22) Date of filing: **30.12.2024**

(51) International Patent Classification (IPC):
**B60C 3/04** *(2006.01)* **B60C 11/00** *(2006.01)*
**B60C 11/03** *(2006.01)*

(52) Cooperative Patent Classification (CPC):
**B60C 11/0083; B60C 3/04; B60C 11/005;**
B60C 2011/0025; B60C 2011/0033;
B60C 2011/0341

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.01.2024 JP 2024001450**

(43) Date of publication of application:
**16.07.2025 Bulletin 2025/29**

(73) Proprietor: **Sumitomo Rubber Industries, Ltd.
Kobe-shi, Hyogo 651-0072 (JP)**

(72) Inventors:
• **OKAWARA, Renya**
  **Kobe-shi, Hyogo, 651-0072 (JP)**
• **ISHIGAKI, Yuichi**
  **Kobe-shi, Hyogo, 651-0072 (JP)**

(74) Representative: **Manitz Finsterwald
Patent- und Rechtsanwaltspartnerschaft mbB
Martin-Greif-Straße 1
80336 München (DE)**

(56) References cited:
**EP-A1- 4 357 158      EP-A1- 4 480 715
WO-A1-2017/116393   WO-A1-2019/216323
WO-A1-2020/158265   DE-A1- 102011 001 133**

**Description**

BACKGROUND OF THE INVENTION

Field of the Invention

The present invention relates to a pneumatic tire.

Background Art

In recent years, small-sized shuttle buses intended for transporting people and objects in urban areas have been proposed (see, for example, Japanese Laid-Open Patent Publication No. 2021-075088). Each of such small-sized shuttle buses is required to ensure a large vehicle interior space. In-wheel motors are sometimes employed for the small-sized shuttle bus.

In Japanese Laid-Open Patent Publication No. 2023-102627, a pneumatic tire to be used for the small-sized shuttle bus is proposed. For the tire, a rim diameter, a ratio between a tire cross-sectional height and a tire cross-sectional width, and a ratio between a rim width of a rim and the tire cross-sectional width are defined in order to ensure the vehicle interior space and a wide rim space that can accommodate the corresponding in-wheel motor.

The above tire has a problem in that a shoulder land portion is easily worn owing to the shape of the tire. Meanwhile, the above tire is often used for an electric vehicle as well. Considering this, the fuel economy performance of the tire is also required to be improved from the viewpoint of lengthening the running distance thereof.

A pneumatic tire in accordance with the preamble of claim 1 is known from WO 2020/158265 A1. Related tires are described in WO 2019/216323 A1, DE 10 2011 001133 A1 and WO 2017/116393 A1.

The present invention has been made in view of the above circumstances, and a main object of the present invention is to provide a pneumatic tire that has a specific tire size and in which the wear resistance of a shoulder land portion and the fuel economy performance have been improved.

SUMMARY OF THE INVENTION

The object is solved by a pneumatic tire having the features of claim 1. Sub-claims are directed at specific embodiments of the invention.

The present invention is directed to a pneumatic tire to be mounted on a rim and used, the rim having a rim diameter RD of 10 to 18 inches, a ratio SH/SW of a cross-sectional height SH of the tire to a cross-sectional width SW of the tire being 0.30 to 0.45, a ratio RW/SW of a rim width RW of the rim to the cross-sectional width SW of the tire being 0.78 to 0.99, the pneumatic tire comprising a tread portion. The tread portion includes: a first tread end; a second tread end; a plurality of circumferential grooves located between the first tread end and the second tread end and continuously extending in a tire circumferential direction; and a plurality of land portions demarcated by the plurality of circumferential grooves. Each of the first tread end and the second tread end corresponds to an end of a ground-contact surface obtained when 70% of a standardized load is applied to the tire in a standardized state in which the tire is mounted on a standardized rim and inflated to a standardized internal pressure; and the tread portion is brought into contact with a flat surface at a camber angle of 0. The plurality of circumferential grooves include a first shoulder circumferential groove located to be closest to the first tread end. The plurality of land portions include a first shoulder land portion demarcated on an outer side in a tire axial direction relative to the first shoulder circumferential groove. The first shoulder land portion includes: a first rubber layer forming a tread surface extending from the first tread end to the first shoulder circumferential groove; and a second rubber layer disposed on an inner side in a tire radial direction relative to the first rubber layer and formed from a rubber material different from a rubber material of the first rubber layer. A width W1 (mm) in the tire axial direction of the tread surface of the first shoulder land portion satisfies expression (1) described below. The width W1 (mm), a thickness T1 (mm) of the first rubber layer, a thickness T2 (mm) of the second rubber layer, a loss tangent $\tan\delta 1$ at 30°C of the first rubber layer, and a loss tangent $\tan\delta 2$ at 70°C of the second rubber layer satisfy expression (2) described below.

$$W1 > 0.001 \times (SW \times SH) \cdots (1)$$

$$W1 \times (T1 \times \tan\delta 1 + T2 \times \tan\delta 2)/(T1 + T2) \leq 4 \cdots (2),$$

wherein the values of W1, SW, SH, T1 and T2 to be inserted into equations (1) and (2) are measured in millimeter.

According to an embodiment of the invention, the width W1 (mm) satisfies expression (3) described below,

$$W1 < 0.002 \times (SW \times SH) \cdots (3),$$

wherein the values of W1, SW and SH to be inserted into equation (3) are measured in millimeter.

According to an embodiment of the invention, the width W1 (mm), the thickness T1 (mm) of the first rubber layer, the thickness T2 (mm) of the second rubber layer, the loss tangent $\tan\delta1$ at 30°C of the first rubber layer, and the loss tangent $\tan\delta2$ at 70°C of the second rubber layer satisfy expression (4) described below,

$$W1 \times (T1 \times \tan\delta1 + T2 \times \tan\delta2)/(T1+T2) \geq 3 \cdots (4),$$

wherein the values of W1, T1 and T2 to be inserted into equation (4) are measured in millimeter.

According to an embodiment of the invention, the thickness T1 (mm) is not smaller than 0.9 times a depth D1 (mm) of the first shoulder circumferential groove.

According to an embodiment of the invention, the thickness T1 (mm) is not larger than 1.5 times the depth D1 (mm).

According to an embodiment of the invention, the first shoulder land portion has a curved profile extending from the first shoulder circumferential groove to a position beyond the first tread end.

According to an embodiment of the invention, the curved profile has, at the first tread end, a curvature radius Rt (mm) of not smaller than 0.3 times the width W1 (mm).

According to an embodiment of the invention, the curvature radius Rt (mm) is not larger than 2.0 times the width W1 (mm).

In the pneumatic tire according to the present invention, the wear resistance of the shoulder land portion and the fuel economy performance can be improved owing to employment of the above configuration.

BRIEF DESCRIPTION OF THE DRAWINGS

FIG. 1 is a transverse cross-sectional view of a pneumatic tire according to an embodiment of the present invention;
FIG. 2 is a perspective view of a vehicle mounted with tires each of which is the tire according to the present invention;
FIG. 3 is an enlarged cross-sectional view of a tread portion in FIG. 1; and
FIG. 4 is an enlarged cross-sectional view of a first shoulder land portion in FIG. 3.

DETAILED DESCRIPTION

Hereinafter, an embodiment of the present invention will be described with reference to the drawings. The drawings are depicted so as to include the features of the present invention, but may contain exaggerated expressions and expressions that differ from the dimensional ratio of the actual structure in order to help the understanding of the present invention. In addition, the same or common elements are denoted by the same reference characters throughout each embodiment, and the redundant description thereof is omitted. A known configuration can be employed as appropriate, as a configuration that is not described in the present description.

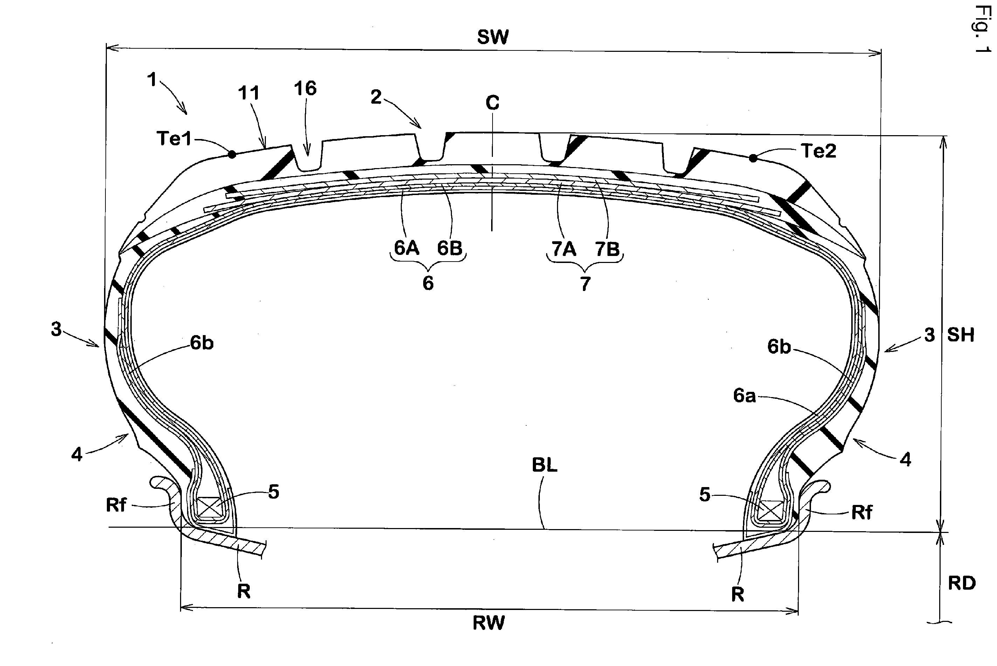

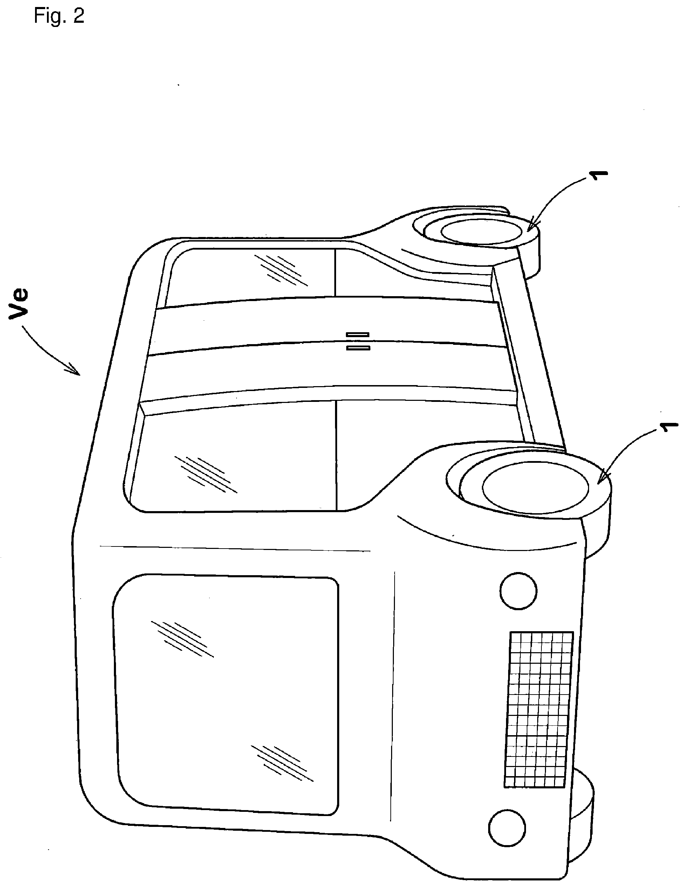

FIG. 1 is a transverse cross-sectional view of a pneumatic tire 1 (hereinafter, sometimes simply referred to as "tire 1") according to an embodiment of the present invention. FIG. 2 is a perspective view schematically showing a vehicle Ve mounted with tires each of which is the tire 1 according to the present invention. As shown in FIG. 1 and FIG. 2, the tire 1 according to the present embodiment is to be mounted on a rim R and used, and is suitably used as, for example, a pneumatic tire for the vehicle Ve such as a small-sized bus (specifically, a small-sized shuttle bus).

As shown in FIG. 2, the above vehicle Ve is a four-wheeled automobile. The vehicle Ve is not limited to a four-wheeled vehicle and may have a six-wheeled configuration or an eight-wheeled configuration. The vehicle Ve is mounted with a predetermined number of the tires 1 according to the wheel configuration.

The vehicle Ve is classified as a small-sized shuttle bus to be used for transporting people, objects, and the like in a city, for example. The small-sized shuttle bus is assumed to be a vehicle having an entire length of 4 m to 7 m, an entire width of about 2 m, and a total vehicle weight of about 3 t. However, the tire 1 according to the present invention is used not only for vehicles within the above range but also for various vehicles.

Also, the purpose of the vehicle Ve is not necessarily limited to transportation of people, and may be transportation of objects, a mobile store, a mobile office, or the like. The vehicle Ve is desirably an electric automobile having an automated driving function, for example. In addition, the vehicle Ve is assumed to have a range of comparatively low running speeds (with the average speed being about 50 km/h) since focus is mainly placed on transportation of people, objects, or the like in a city. However, the mode of the vehicle Ve is not limited to such a mode.

In a case where the vehicle Ve is an electric automobile, motors are desirably disposed in rims thereof. In addition, in this case, the vehicle Ve preferably has an independent steering function of allowing independent steering of each of the wheels. Consequently, turning or the like is easily performed with the place being fixed, and the vehicle interior space of the vehicle Ve can be made large.

The tire 1 according to the present embodiment to be used for such a vehicle Ve is required to have a high space efficiency. Thus, a small rim diameter and a low tire cross-sectional height are required for the tire 1.

FIG. 1 is a transverse cross-sectional view, including a rotation axis, of the tire 1 in a standardized state. In the case of a pneumatic tire for which various standards are defined, the "standardized state" is a state where: the tire is mounted on a standardized rim and inflated to a standardized internal pressure; and no load is applied to the tire. In the case of a tire for which various standards are not defined, the standardized state means a standard use state, corresponding to the purpose of use of the tire, where: the tire has not been mounted to a vehicle; and no load is applied to the tire. In the present description, dimensions and the like of constituents of the tire are values measured in the standardized state, unless otherwise specified. Meanwhile, dimensions of constituents (e.g., an internal member of the tire) that cannot be measured in the standardized state are values measured in a state, of the tire, having been made as similar to the standardized state as possible.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The tire 1 includes a tread portion 2, a pair of sidewall portions 3, and a pair of bead portions 4. Each of the sidewall portions 3 is contiguous with the corresponding outer side in a tire axial direction of the tread portion 2 and extends in a tire radial direction. Each of the bead portions 4 is contiguous with the inner side in the tire radial direction of the corresponding sidewall portion 3. In addition, in the bead portion 4, a bead core 5 for fixing the bead portion 4 to the rim R is embedded.

In addition, the tire 1 includes a carcass 6. The carcass 6 extends between the pair of bead portions 4. In other words, the carcass 6 extends from the bead portion 4 on one side through the sidewall portion 3 on the one side, the tread portion 2, and the sidewall portion 3 on the other side to the bead portion 4 on the other side.

The carcass 6 is composed of, for example, two carcass plies 6A and 6B. Each of the carcass plies includes, for example, a body portion 6a and turned-up portions 6b. The body portion 6a extends between the pair of bead portions 4, for example. Each of the turned-up portions 6b is contiguous with the body portion 6a and turned up around the corresponding bead core 5 from the inner side to the outer side in the tire axial direction, for example.

Each of the carcass plies 6A and 6B includes a plurality of carcass cords (not shown) and a topping rubber (not shown) coating the carcass cords. As each of the carcass cords, an organic fiber cord formed from aramid, rayon, or the like is used, for example. The carcass cords are desirably arrayed at an angle of 70 to 90° relative to a tire equator C, for example. However, the form of the tire 1 according to the present invention is not limited to such a form.

In the tread portion 2 in the present embodiment, a belt layer 7 is disposed. The belt layer 7 is composed of, for example, a first belt ply 7A and a second belt ply 7B. Each of the belt plies includes, for example, a plurality of belt cords arrayed at an angle of 15 to 45° relative to a tire circumferential direction. The belt cords included in the first belt ply 7A and the belt cords included in the second belt ply 7B are tilted in mutually opposite directions relative to the tire circumferential direction. Consequently, the tread portion 2 is effectively reinforced.

In the present invention, the rim R has a rim diameter RD of 10 to 18 inches. A ratio SH/SW of a cross-sectional height SH of the tire 1 to a cross-sectional width SW of the tire 1 is 0.30 to 0.45. A ratio RW/SW of a rim width RW of the rim R to the cross-sectional width SW of the tire 1 is 0.78 to 0.99. The cross-sectional width SW is, for example, 150 to 250 mm. A tire size is assumed to be, for example, 205/40R15, 205/30R15, or the like. However, the tire size in the present invention is not limited to such tire sizes.

The rim diameter RD is the outer diameter of a rim body portion fitted by the bead core 5 of each of the bead portions 4. In a case where a side wall of the tire 1 has protrusions (not shown) representing patterns or characters, the cross-sectional width SW of the tire 1 corresponds to a width obtained by excluding the protrusions. The cross-sectional height SH of the tire 1 corresponds to 1/2 of the difference between the outer diameter of the tire and the rim diameter RD. In other words, the cross-sectional height SH corresponds to the distance in the tire radial direction from a bead baseline BL to the outer end in the tire radial direction of the tire 1. The bead baseline BL means a tire axial direction line passing through a position corresponding to the rim diameter.

The rim width RW of the rim R corresponds to the distance in the tire axial direction from the inner surface of one of rim flanges Rf to the inner surface of the other rim flange Rf. In a case where the inner surfaces are tilted, said distance is measured at the center positions in the tire radial direction of the bead cores 5 when the tire 1 is mounted on the rim R.

As described above, the tire 1 according to the present invention has a comparatively small rim diameter RD and a comparatively low cross-sectional height SH, and has a comparatively large rim width RW in proportion to the cross-sectional width SW of the tire. Such a tire 1 makes it possible to, for example, increase the space efficiency in the vehicle space when being mounted to the above vehicle Ve (shown in FIG. 2) and sufficiently ensure, in a vehicle in which a motor is disposed in each rim, an accommodation space for the motor. In addition, such a tire 1 can maintain a sufficient air volume for bearing the total vehicle weight.

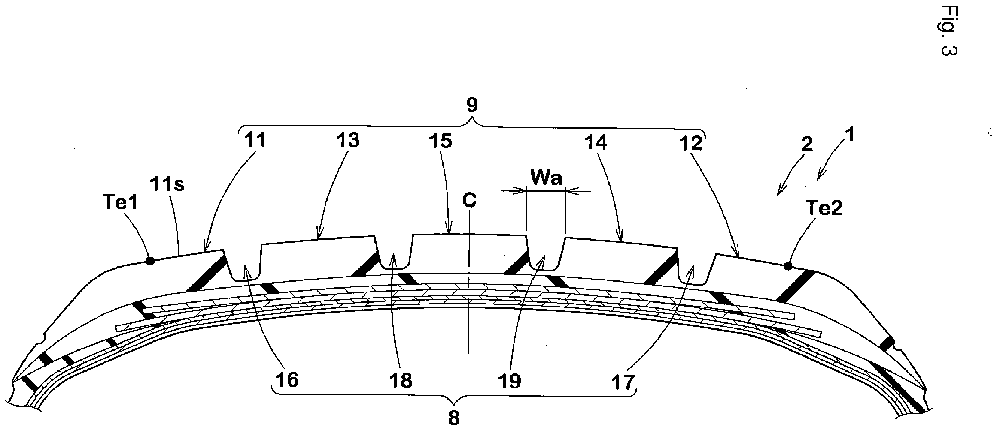

FIG. 3 is an enlarged cross-sectional view of the tread portion 2. As shown in FIG. 3, the tread portion 2 includes: a first tread end Te1; a second tread end Te2; a plurality of circumferential grooves 8 located between these tread ends and continuously extending in the tire circumferential direction; and a plurality of land portions 9 demarcated by the plurality of circumferential grooves 8.

Each of the first tread end Te1 and the second tread end Te2 corresponds to an end of a ground-contact surface obtained when: 70% of a standardized load is applied to the tire 1 in the standardized state; and the tread portion 2 is brought into contact with a flat surface at a camber angle of 0°.

In the case of a pneumatic tire for which various standards are defined, the "standardized load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. Meanwhile, in the case of a tire for which various standards are not defined, the "standardized load" refers to the maximum load that can be applied when the tire is used and that conforms to the above standard.

The plurality of circumferential grooves 8 include at least a first shoulder circumferential groove 16 located to be closest to the first tread end Te1. The plurality of circumferential grooves 8 in the present embodiment further include a second shoulder circumferential groove 17, a first crown circumferential groove 18, and a second crown circumferential groove 19. The second shoulder circumferential groove 17 is located to be closest to the second tread end Te2. The first crown circumferential groove 18 is located between the first shoulder circumferential groove 16 and the tire equator C. The second crown circumferential groove 19 is located between the second shoulder circumferential groove 17 and the tire equator C.

From the viewpoint of ensuring the wet performance of the tire 1, each of the circumferential grooves 8 has a groove width Wa of at least 3 mm or larger and desirably 5 to 15 mm. From the same viewpoint, each of the circumferential grooves 8 has a depth of at least 3 mm or larger and desirably 5 to 10 mm.

The plurality of land portions 9 include at least a first shoulder land portion 11 demarcated on the outer side in the tire axial direction relative to the first shoulder circumferential groove 16. The plurality of land portions 9 in the present embodiment further include a second shoulder land portion 12, a first middle land portion 13, a second middle land portion 14, and a crown land portion 15. The second shoulder land portion 12 is demarcated on the outer side in the tire axial direction relative to the second shoulder circumferential groove 17. The first middle land portion 13 is demarcated between the first shoulder circumferential groove 16 and the first crown circumferential groove 18. The second middle land portion 14 is demarcated between the second shoulder circumferential groove 17 and the second crown circumferential groove 19. The crown land portion 15 is demarcated between the first crown circumferential groove 18 and the second crown circumferential groove 19.

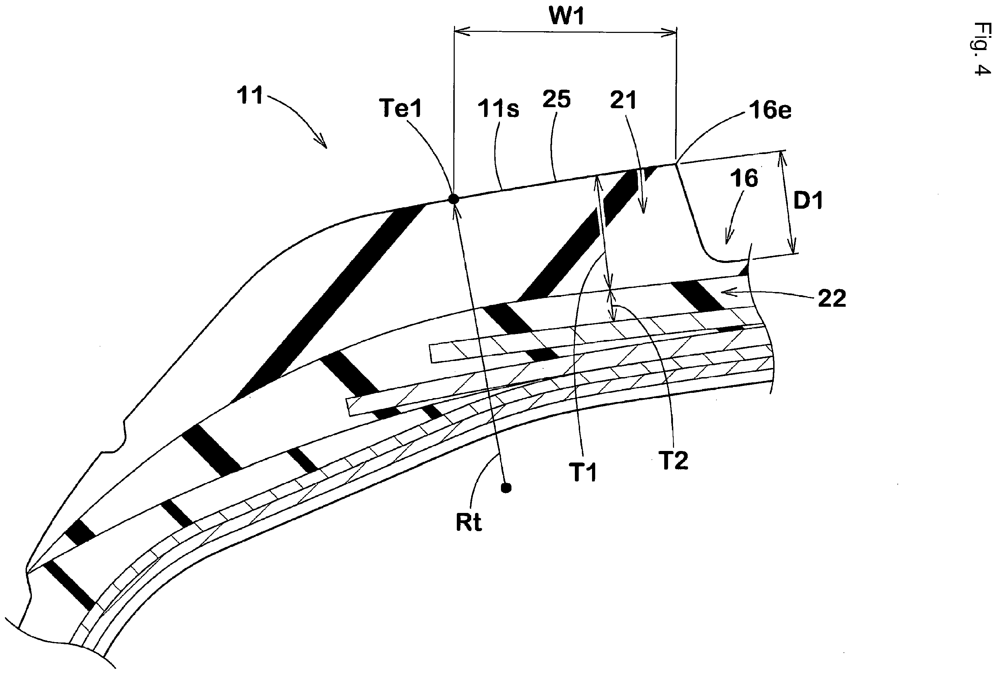

FIG. 4 is an enlarged cross-sectional view of the first shoulder land portion 11. As shown in FIG. 4, the first shoulder land portion 11 includes a first rubber layer 21 and a second rubber layer 22. The first rubber layer 21 forms a tread surface 11s of the first shoulder land portion 11. The tread surface 11s means a surface extending from the first tread end Te1 to a groove edge 16e of the first shoulder circumferential groove 16. The first rubber layer 21 in the present embodiment also forms a buttress surface on the outer side relative to the first tread end Te1. The second rubber layer 22 is disposed on the inner side in the tire radial direction relative to the first rubber layer 21, and, in the present embodiment, the first rubber layer 21 and the second rubber layer 22 are contiguous with each other.

In the present invention, a width W1 (mm) in the tire axial direction of the tread surface 11s of the first shoulder land portion 11 satisfies expression (1) described below. In addition, in the present invention, the width W1 (mm), a thickness T1 (mm) of the first rubber layer 21, a thickness T2 (mm) of the second rubber layer 22, a loss tangent tanδ1 at 30°C of the first rubber layer 21, and a loss tangent tanδ2 at 70°C of the second rubber layer 22 satisfy expression (2) described below.

$$W1 > 0.001 \times (SW \times SH) \cdots (1)$$

$$W1 \times (T1 \times \tan\delta1 + T2 \times \tan\delta2)/(T1 + T2) \leq 4 \cdots (2)$$

Each of the thickness T1 of the first rubber layer 21 and the thickness T2 of the second rubber layer 22 is a thickness measured at a position away from the groove edge 16e of the first shoulder circumferential groove 16 to the first tread end Te1 side by 5 mm.

In the present description, each of the loss tangents tanδ of the rubbers is a value measured according to the stipulation in JIS-K 6394 under the following conditions by using a viscoelasticity spectrometer manufactured by Iwamoto Seisakusho.

Initial strain: 10%
Amplitude: ±1%
Frequency: 10 Hz
Deformation mode: tension

In the present invention, the average values of the above respective parameters are desirably applied to the above expression (1) and the above expression (2) from the viewpoint of permitting variations in the parameters. Therefore, for example, the average value of widths W1 measured at a plurality of positions different from one another in the tire circumferential direction is used as the width W1 of the tread surface 11s of the first shoulder land portion 11. The same applies to other parameters (including parameters described below). Technical significances of the above expression (1) and the above expression (2) are as follows.

A tire having a size specified in the present invention has a problem in that, owing to the shape thereof and a use condition thereof (e.g., a use condition in a vehicle that is frequently braked/driven and turned right/left, such as a small-sized bus), a shoulder land portion is easily worn, and the wear causes shortening of the period during which the tire is usable. In addition, improvement of fuel economy performance is also required for such a tire having this size.

The present inventors have obtained a finding that it is effective to, from the viewpoint of suppressing wear of the shoulder land portion, associate the size of the tread surface of the shoulder land portion with the size of the tire cross section (i.e., a product obtained by multiplying the cross-sectional height SH of the tire by the cross-sectional width SW of the tire) and set a lower limit for the size of the tread surface. In addition, the above expression (1) has been derived through various experiments. That is, in the present invention, the above expression (1) is satisfied so that the tread surface 11s of the first shoulder land portion 11 has a sufficient size in proportion to the size of the tire cross section, and hence the wear resistance of the first shoulder land portion 11 can be improved. In addition, the above advantageous effect causes wear of the tread portion to progress evenly and makes it possible to lengthen the period during which the tire is usable.

In addition, the present inventors have found that it is effective to define the extent of energy loss in the first shoulder land portion 11 (in other words, heat generation properties of the land portion) in association with the size of the tread surface 11s of the first shoulder land portion 11 in order to improve the fuel economy performance. In addition, the present inventors have found that the thicknesses and the loss tangents of the respective rubber layers are desirably considered for the extent of energy loss in the first shoulder land portion 11. In addition, the present inventors have ascertained the following tendency through various experiments.

Specifically, the first rubber layer 21 forms the tread surface 11s, and thus, even though the deformation amount of the first rubber layer 21 is large, the extent of cooling thereof by air is also large. Thus, it is effective to define the energy loss in the first rubber layer 21 with the loss tangent $\tan\delta 1$ at 30°C of this rubber layer. Meanwhile, the second rubber layer 22 is less likely to be cooled than the first rubber layer 21, and thus it is effective to define the energy loss in the second rubber layer 22 with the loss tangent $\tan\delta 2$ at 70°C of this rubber layer. Furthermore, the present inventors have found that the energy loss in the first shoulder land portion 11 can be more accurately defined with the parameter "$(T1\times\tan\delta 1+T2\times\tan\delta 2)/(T1+T2)$" (hereinafter, sometimes referred to as "loss parameter").

In the present invention, an upper limit for a value obtained by multiplying the width W1 of the tread surface of the first shoulder land portion 11 by the above loss parameter is defined. That is, in the present invention, the above expression (2) is satisfied so that the energy loss in the first shoulder land portion 11 can be decreased, whereby excellent fuel economy performance can be exhibited.

Hereinafter, more detailed configurations of the present embodiment will be described. The configurations described below indicate specific modes of the present embodiment. Therefore, it is needless to say that the present invention can achieve the above effects even when the configurations described below are not provided. In addition, even when any one of the configurations described below is independently applied to the tire according to the present invention having the above features, performance improvement based on said configuration can be expected. Furthermore, when some of the configurations described below are applied in combination, complex performance improvement based on said configurations can be expected.

As shown in FIG. 3, the tread portion 2 of the tire 1 according to the present embodiment is substantially left-right symmetric. Therefore, the configuration of the first shoulder land portion 11 mainly described in the present description is also applicable to the second shoulder land portion 12.

As shown in FIG. 4, when the width W1 of the first shoulder land portion 11 is excessively large, the fuel economy performance is sometimes impaired, and the first shoulder circumferential groove 16 is sometimes unable to exhibit sufficient drainage performance. Considering this, the width W1 desirably satisfies expression (3) described below.

$$W1 < 0.002 \times (SW \times SH) \cdots (3)$$

Also, when the left-hand side of the above expression (2) has an excessively small value, the first shoulder land portion 11 becomes less likely to exhibit a moderate grip.
Considering this, the width W1 of the tread surface 11s of the first shoulder land portion 11, the thickness T1 of the first rubber layer 21, the thickness T2 of the second rubber layer 22, the loss tangent $\tan\delta1$ at 30°C of the first rubber layer 21, and the loss tangent $\tan\delta2$ at 70°C of the second rubber layer 22 desirably satisfy expression (4) described below.

$$W1 \times (T1 \times \tan\delta1 + T2 \times \tan\delta2)/(T1 + T2) \geq 3 \cdots (4)$$

The loss tangent $\tan\delta1$ at 30°C of the first rubber layer 21 is, for example, 0.15 to 0.25 and desirably 0.18 to 0.22. The loss tangent $\tan\delta2$ at 70°C of the second rubber layer 22 is, for example, 0.03 to 0.11 and desirably 0.05 to 0.09. These rubber layers can be obtained by combining publicly-known rubber materials as appropriate, and description of the combining is omitted herein.

The thickness T1 of the first rubber layer 21 is, for example, 5.0 to 15.0 mm and desirably 8.0 to 12.0 mm. The thickness T2 of the second rubber layer 22 is, for example, 1.0 to 5.0 mm and desirably 1.0 to 3.0 mm.

In the present embodiment, the first shoulder circumferential groove 16 has a depth D1 of 5.0 to 10.0 mm. In addition, the thickness T1 of the first rubber layer 21 is, for example, desirably not smaller than 0.9 times and more desirably not smaller than 1.0 time the depth D1, and meanwhile, desirably not larger than 1.5 times and more desirably not larger than 1.3 times the depth D1. Consequently, the wet performance can be maintained even in a state where the tread portion 2 is worn to some extent.

The profile of the first shoulder land portion 11 in the present embodiment is not a square shape obtained by being locally bent at the first tread end Te1, but is a so-called round shape. That is, the first shoulder land portion 11 has a curved profile 25 extending from the first shoulder circumferential groove 16 to a position beyond the first tread end Te1. The curved profile 25 is smoothly curved inward in the tire radial direction, from the groove edge 16e of the first shoulder circumferential groove 16 to the outer side in the tire axial direction. Consequently, the first shoulder land portion 11 has a moderately round shape, and thus the fuel economy performance and the wet performance can be expected to be improved.

From the viewpoint of increasing the wear resistance of the first shoulder land portion 11 and the fuel economy performance in a balanced manner, the curved profile 25 has, at the first tread end Te1, a curvature radius Rt (mm) of desirably not smaller than 0.3 times and more desirably not smaller than 0.5 times the width W1, and meanwhile, desirably not larger than 2.0 times and more desirably not larger than 1.8 times the width W1.

Although the pneumatic tire according to the embodiment of the present invention has been described above in detail, the present invention is not limited to the above specific embodiment, and various modifications can be made to implement the present invention within the scope of the appended claims.

EXAMPLES

Pneumatic tires each having a basic structure shown in FIG. 1 and each having a rim diameter of 15 inches were produced as samples on the basis of specifications in Table 1. In addition, tires satisfying neither expression (1) nor (2) described above were produced as samples in Comparative Examples 1 to 6. The tires in the Comparative Examples are substantially the same as the tires in the Examples, except for the above feature. The wear resistance of a shoulder land portion and the fuel economy performance in each of the test tires were tested. Specifications common to the test tires and methods for the tests are as follows.

Mounting rim: 15×7.0 J
Tire internal pressure: 350 kPa
Test vehicle: a small-sized bus having a riding capacity of 8 persons

<Wear Resistance of Shoulder Land Portion>

The test vehicle mounted with the test tires of each type was caused to run on a test course having an asphalt road surface, and a wear energy of the first shoulder land portion was measured at the time of cornering. Regarding the result, the reciprocal of the wear energy is indicated as an index, and a larger numerical value thereof indicates that the wear resistance of the shoulder land portion is better.

<Fuel Economy Performance>

The rolling resistance of each of the test tires was measured according to ISO conditions by using a rolling resistance tester. Regarding the result, the reciprocal of the rolling resistance is indicated as an index, and a larger numerical value thereof indicates that the fuel economy performance is better.

The results of the tests are indicated in Table 1.

[Table 1]

|  | Com. Ex. 1 | Com. Ex. 2 | Com. Ex. 3 | Ex. 1 | Ex. 2 | Ex. 3 | Ex. 4 |
|---|---|---|---|---|---|---|---|
| Cross-sectional height SH of tire (mm) | 82 | 82 | 82 | 82 | 82 | 82 | 82 |
| Cross-sectional width SW of tire (mm) | 205 | 205 | 205 | 205 | 205 | 205 | 205 |
| Width W1 of tread surface of first shoulder land portion (mm) | 15.0 | 25.0 | 20.0 | 20.0 | 20.0 | 18.0 | 22.0 |
| $0.001 \times (SW \times SH)$ | 16.81 | 16.81 | 16.81 | 16.81 | 16.81 | 16.81 | 16.81 |
| Whether or not expression (1) is satisfied | Not satisfied | Satisfied | Satisfied | Satisfied | Satisfied | Satisfied | Satisfied |
| Thickness T1 of first rubber layer (mm) | 8.0 | 8.0 | 8.0 | 8.0 | 7.0 | 8.0 | 8.0 |
| Loss tangent $\tan\delta 1$ at 30°C of first rubber layer | 0.20 | 0.20 | 0.25 | 0.20 | 0.20 | 0.20 | 0.20 |
| Thickness T2 of second rubber layer (mm) | 2.0 | 2.0 | 2.0 | 2.0 | 3.0 | 2.0 | 2.0 |
| Loss tangent $\tan\delta 2$ at 70°C of second rubber layer | 0.07 | 0.07 | 0.07 | 0.07 | 0.07 | 0.07 | 0.07 |
| $W1 \times (T1 \times \tan\delta 1 + T2 \times \tan\delta 2)/(T1+T2)$ | 2.61 | 4.35 | 4.28 | 3.48 | 3.22 | 3.13 | 3.83 |
| Whether or not expression (2) is satisfied | Satisfied | Not satisfied | Not satisfied | Satisfied | Satisfied | Satisfied | Satisfied |
| Wear resistance of shoulder land portion (index) | 85 | 105 | 100 | 100 | 100 | 100 | 107 |
| Fuel economy performance (index) | 110 | 95 | 95 | 105 | 105 | 107 | 102 |

[Table 2]

|  | Ex. 5 | Ex. 6 | Ex. 7 | Ex. 8 | Ex. 9 | Ex. 10 | Com. Ex. 4 |
|---|---|---|---|---|---|---|---|
| Cross-sectional height SH of tire (mm) | 82 | 82 | 82 | 82 | 82 | 82 | 82 |
| Cross-sectional width SW of tire (mm) | 205 | 205 | 205 | 205 | 205 | 205 | 205 |
| Width W1 of tread surface of first shoulder land portion (mm) | 20.0 | 20.0 | 20.0 | 20.0 | 20.0 | 20.0 | 20.0 |

(continued)

| | Ex. 5 | Ex. 6 | Ex. 7 | Ex. 8 | Ex. 9 | Ex. 10 | Com. Ex. 4 |
|---|---|---|---|---|---|---|---|
| 0.001×(SW×SH) | 16.81 | 16.81 | 16.81 | 16.81 | 16.81 | 16.81 | 16.81 |
| Whether or not expression (1) is satisfied | Satisfied | Satisfied | Satisfied | Satisfied | Satisfied | Satisfied | Satisfied |
| Thickness T1 of first rubber layer (mm) | 6.0 | 9.0 | 8.0 | 8.0 | 8.0 | 8.0 | 8.0 |
| Loss tangent tan$\delta$1 at 30°C of first rubber layer | 0.20 | 0.20 | 0.15 | 0.18 | 0.22 | 0.23 | 0.24 |
| Thickness T2 of second rubber layer (mm) | 4.0 | 1.0 | 2.0 | 2.0 | 2.0 | 2.0 | 2.0 |
| Loss tangent tan$\delta$2 at 70°C of second rubber layer | 0.07 | 0.07 | 0.07 | 0.07 | 0.07 | 0.07 | 0.07 |
| W1×(T1×tan$\delta$1+T2×tan$\delta$2)/(T1+T2) | 2.96 | 3.74 | 2.68 | 3.16 | 3.80 | 3.96 | 4.12 |
| Whether or not expression (2) is satisfied | Satisfied | Satisfied | Satisfied | Satisfied | Satisfied | Satisfied | Not satisfied |
| Wear resistance of shoulder land portion (index) | 105 | 105 | 105 | 105 | 105 | 105 | 105 |
| Fuel economy performance (index) | 115 | 100 | 115 | 110 | 102 | 100 | 95 |

[Table 3]

| | Com. Ex. 5 | Com. Ex. 6 | Ex. 11 | Com. Ex. 7 | Com. Ex. 8 | Ex. 12 |
|---|---|---|---|---|---|---|
| Cross-sectional height SH of tire (mm) | 61.5 | 61.5 | 61.5 | 92.2 | 92.2 | 92.2 |
| Cross-sectional width SW of tire (mm) | 205 | 205 | 205 | 205 | 205 | 205 |
| Width W1 of tread surface of first shoulder land portion (mm) | 12.0 | 25.0 | 20.0 | 15.0 | 25.0 | 20.0 |
| 0.001×(SW×SH) | 12.61 | 12.61 | 12.61 | 18.90 | 18.90 | 18.90 |
| Whether or not expression (1) is satisfied | Not satisfied | Satisfied | Satisfied | Not satisfied | Satisfied | Satisfied |
| Thickness T1 of first rubber layer (mm) | 8.0 | 8.0 | 8.0 | 8.0 | 8.0 | 8.0 |
| Loss tangent tan$\delta$1 at 30°C of first rubber layer | 0.20 | 0.20 | 0.20 | 0.20 | 0.20 | 0.20 |
| Thickness T2 of second rubber layer (mm) | 2.0 | 2.0 | 2.0 | 2.0 | 2.0 | 2.0 |
| Loss tangent tan$\delta$2 at 70°C of second rubber layer | 0.07 | 0.07 | 0.07 | 0.07 | 0.07 | 0.07 |
| W1×(T1×tan$\delta$1+T2×tan$\delta$2)/(T1+T2) | 2.09 | 4.35 | 3.48 | 2.61 | 4.35 | 3.48 |

(continued)

| Whether or not expression (2) is satisfied | Satisfied | Not satisfied | Satisfied | Satisfied | Not satisfied | Satisfied |
|---|---|---|---|---|---|---|
| Wear resistance of shoulder land portion (index) | 80 | 110 | 105 | 85 | 110 | 105 |
| Fuel economy performance (index) | 117 | 95 | 110 | 115 | 95 | 110 |

As indicated in Tables 1 to 3, as a result of performing the tests with the various parameters being changed, it is found that, in each of Comparative Examples 1, 5, and 7, expression (1) of the present invention was not satisfied, and thus the wear resistance of the shoulder land portion was low. Also, it is found that, in each of Comparative Examples 2 to 4, 6, and 8, expression (2) of the present invention was not satisfied, and thus the fuel economy performance was low. Meanwhile, it can be understood that, in the tire of each of the Examples, expressions (1) and (2) were satisfied, and thus the wear resistance of the shoulder land portion and the fuel economy performance were significantly improved.

## Claims

1.  A pneumatic tire (1) to be mounted on a rim (R) and used,

    the rim (R) having a rim diameter RD of 10 to 18 inches,
    the pneumatic tire (1) comprising a tread portion (2), wherein
    the tread portion (2) includes

    a first tread end (Te1),
    a second tread end (Te2), wherein each of the first tread end (Te1) and the second tread end (Te2) corresponds to an end of a ground-contact surface obtained when 70% of a standardized load is applied to the tire (1) in a standardized state in which the tire is mounted on a standardized rim and inflated to a standardized internal pressure; and the tread portion (2) is brought into contact with a flat surface at a camber angle of 0,
    a plurality of circumferential grooves (8) located between the first tread end (Te1) and the second tread end (Te2) and continuously extending in a tire circumferential direction, and
    a plurality of land portions (9) demarcated by the plurality of circumferential grooves (8),

    the plurality of circumferential grooves (8) include a first shoulder circumferential groove (16) located to be closest to the first tread end (Te1),
    the plurality of land portions (9) include a first shoulder land portion (11) demarcated on an outer side in a tire axial direction relative to the first shoulder circumferential groove (16),
    the first shoulder land portion (11) includes

    a first rubber layer (21) forming a tread surface (11s) extending from the first tread end (Te1) to the first shoulder circumferential groove (16), and
    a second rubber layer (22) disposed on an inner side in a tire radial direction relative to the first rubber layer (21) and formed from a rubber material different from a rubber material of the first rubber layer (21),

    **characterized in that**
    a ratio SH/SW of a cross-sectional height SH of the tire (1) to a cross-sectional width SW of the tire (1) is 0.30 to 0.45,
    a ratio RW/SW of a rim width RW of the rim (R) to the cross-sectional width SW of the tire (1) is 0.78 to 0.99,
    a width W1 [mm] in the tire axial direction of the tread surface (11s) of the first shoulder land portion (11) satisfies expression (1) described below, and
    the width W1 [mm], a thickness T1 [mm] of the first rubber layer (21), a thickness T2 [mm] of the second rubber layer (22), a loss tangent tan$\delta$1 at 30°C of the first rubber layer (21), and a loss tangent tan$\delta$2 at 70°C of the second rubber layer (22) satisfy expression (2) described below,

$$W1 > 0.001 \times (SW \times SH) \cdots (1)$$

$$W1\times(T1\times\tan\delta1+T2\times\tan\delta2)/(T1+T2)\leq4 \cdots (2),$$

wherein the values of W1, SW, SH, T1 and T2 to be inserted into equations (1) and (2) are measured in millimeter.

2. The pneumatic tire (1) according to claim 1, wherein the width W1 [mm] satisfies expression (3) described below,

$$W1<0.002\times(SW\times SH) \cdots (3),$$

wherein the values of W1, SW and SH to be inserted into equation (3) are measured in millimeter.

3. The pneumatic tire (1) according to claim 1 or 2, wherein the width W1 [mm], the thickness T1 [mm] of the first rubber layer (21), the thickness T2 [mm] of the second rubber layer (22), the loss tangent $\tan\delta1$ at 30°C of the first rubber layer (21), and the loss tangent $\tan\delta2$ at 70°C of the second rubber layer (22) satisfy expression (4) described below,

$$W1\times(T1\times\tan\delta1+T2\times\tan\delta2)/(T1+T2)\geq3 \cdots (4),$$

wherein the values of W1, T1 and T2 to be inserted into equation (4) are measured in millimeter.

4. The pneumatic tire (1) according to any one of claims 1 to 3, wherein the thickness T1 [mm] is not smaller than 0.9 times a depth D1 [mm] of the first shoulder circumferential groove (16).

5. The pneumatic tire (1) according to claim 4, wherein the thickness T1 [mm] is not larger than 1.5 times the depth D1 [mm].

6. The pneumatic tire (1) according to any one of claims 1 to 5, wherein the first shoulder land portion (11) has a curved profile (25) extending from the first shoulder circumferential groove (16) to a position beyond the first tread end (Te1).

7. The pneumatic tire (1) according to claim 6, wherein the curved profile (25) has, at the first tread end (Te1), a curvature radius Rt [mm] of not smaller than 0.3 times the width W1 [mm].

8. The pneumatic tire (1) according to claim 6 or 7, wherein the curvature radius Rt [mm] is not larger than 2.0 times the width W1 [mm].

**Patentansprüche**

1. Luftreifen (1), der auf einer Felge (R) aufzuziehen und zu verwenden ist,

   wobei die Felge (R) einen Felgendurchmesser RD von 10 bis 18 Zoll aufweist,
   wobei der Luftreifen (1) einen Laufflächenabschnitt (2) umfasst, wobei
   der Laufflächenabschnitt (2) umfasst:

   ein erstes Laufflächenende (Te1),
   ein zweites Laufflächenende (Te2), wobei jedes von dem ersten Laufflächenende (Te1) und dem zweiten Laufflächenende (Te2) einem Ende einer Bodenkontaktfläche entspricht, die erhalten wird, wenn 70 % einer standardisierten Last auf den Reifen (1) in einem standardisierten Zustand aufgebracht sind, in dem der Reifen auf eine standardisierte Felge aufgezogen und auf einen standardisierten Innendruck aufgepumpt ist; und der Laufflächenabschnitt (2) mit einer flachen Oberfläche in einem Sturzwinkel von 0 in Kontakt gebracht ist,
   eine Vielzahl von Umfangsrillen (8), die zwischen dem ersten Laufflächenende (Te1) und dem zweiten Laufflächenende (Te2) angeordnet sind und sich kontinuierlich in einer Reifenumfangsrichtung erstrecken, und
   eine Vielzahl von Landabschnitten (9), die durch die Vielzahl von Umfangsrillen (8) abgegrenzt sind,

   wobei die Vielzahl von Umfangsrillen (8) eine erste Schulterumfangsrille (16) umfasst, die so angeordnet ist, dass sie dem ersten Laufflächenende (Te1) am nächsten ist,

wobei die Vielzahl von Landabschnitten (9) einen ersten Schulterlandabschnitt (11) umfasst, der auf einer Außenseite in einer Reifenaxialrichtung relativ zu der ersten Schulterumfangsrille (16) abgegrenzt ist, wobei der erste Schulterlandabschnitt (11) umfasst:

eine erste Gummischicht (21), die eine Laufflächen-Oberfläche (11s) bildet, die sich von dem ersten Laufflächenende (Te1) zu der ersten Schulterumfangsrille (16) erstreckt, und
eine zweite Gummischicht (22), die auf einer Innenseite in einer Reifenradialrichtung relativ zu der ersten Gummischicht (21) angeordnet ist und aus einem Gummimaterial gebildet ist, das sich von einem Gummimaterial der ersten Gummischicht (21) unterscheidet,

**dadurch gekennzeichnet, dass**
ein Verhältnis SH/SW einer Querschnittshöhe SH des Reifens (1) zu einer Querschnittsbreite SW des Reifens (1) 0,30 bis 0,45 beträgt,
ein Verhältnis RW/SW einer Felgenbreite RW der Felge (R) zu der Querschnittsbreite SW des Reifens (1) 0,78 bis 0,99 beträgt,
eine Breite W1 [mm] in der Reifenaxialrichtung der Laufflächen-Oberfläche (11s) des ersten Schulterlandabschnitts (11) den nachstehend beschriebenen Ausdruck (1) erfüllt, und
die Breite W1 [mm], eine Dicke T1 [mm] der ersten Gummischicht (21), eine Dicke T2 [mm] der zweiten Gummischicht (22), ein Verlusttangens $\tan\delta1$ bei 30 °C der ersten Gummischicht (21) und einen Verlusttangens $\tan\delta2$ bei 70 °C der zweiten Gummischicht (22) den nachstehend beschriebenen Ausdruck (2) erfüllen,

$$W1 > 0{,}001 \times (SW \times SH) \cdots (1)$$

$$W1 \times (T1 \times \tan\delta1 + T2 \times \tan\delta2)/(T1 + T2) \leq 4 \cdots (2),$$

wobei die Werte von W1, SW, SH, T1 und T2, die in Gleichungen (1) und (2) einzufügen sind, in Millimetern gemessen werden.

2. Luftreifen (1) nach Anspruch 1, wobei die Breite W1 [mm] den nachstehend beschriebenen Ausdruck (3) erfüllt,

$$W1 < 0{,}002 \times (SW \times SH) \cdots (3),$$

wobei die Werte von W1, SW und SH, die in Gleichung (3) einzufügen sind, in Millimetern gemessen werden.

3. Luftreifen (1) nach Anspruch 1 oder 2, wobei die Breite W1 [mm], die Dicke T1 [mm] der ersten Gummischicht (21), die Dicke T2 [mm] der zweiten Gummischicht (22), der Verlusttangens $\tan\delta1$ bei 30 °C der ersten Gummischicht (21) und der Verlusttangens $\tan\delta2$ bei 70 °C der zweiten Gummischicht (22) den nachstehend beschriebenen Ausdruck (4) erfüllen,

$$W1 \times (T1 \times \tan\delta1 + T2 \times \tan\delta2)/(T1 + T2) \geq 3 \cdots (4),$$

wobei die Werte von W1, T1 und T2, die in Gleichung (4) einzufügen sind, in Millimetern gemessen sind.

4. Luftreifen (1) nach einem der Ansprüche 1 bis 3, wobei die Dicke T1 [mm] nicht kleiner als das 0,9-fache einer Tiefe D1 [mm] der ersten Schulterumfangsrille (16) ist.

5. Luftreifen (1) nach Anspruch 4, wobei die Dicke T1 [mm] nicht größer als das 1,5-fache der Tiefe D1 [mm] ist.

6. Luftreifen (1) nach einem der Ansprüche 1 bis 5, wobei der erste Schulterlandabschnitt (11) ein gekrümmtes Profil (25) aufweist, das sich von der ersten Schulterumfangsrille (16) zu einer Position jenseits des ersten Laufflächenendes (Te1) erstreckt.

7. Luftreifen (1) nach Anspruch 6, wobei das gekrümmte Profil (25) an dem ersten Laufflächenende (Te1) einen Krümmungsradius Rt [mm] von nicht kleiner als das 0,3-fache der Breite W1 [mm] aufweist.

8.  Luftreifen (1) nach Anspruch 6 oder 7, wobei der Krümmungsradius Rt [mm] nicht größer als das 2,0-fache der Breite W1 [mm] ist.

**Revendications**

1.  Bandage pneumatique (1) devant être monté sur une jante (R) et utilisé,

    la jante (R) ayant un diamètre de jante RD de 10 à 18 pouces (25,40 cm à 45,72 cm),
    le bandage pneumatique (1) comprenant une portion formant bande de roulement (2), dans lequel
    la portion formant bande de roulement (2) inclut

    une première extrémité de bande de roulement (Te1),
    une seconde extrémité de bande de roulement (Te2), dans lequel chacune de la première extrémité de bande de roulement (Te1) et de la seconde extrémité de bande de roulement (Te2) correspond à une extrémité d'une surface de contact au sol obtenue quand 70 % d'une charge standardisée est appliquée sur le pneumatique (1) dans un état standardisé dans lequel le pneumatique est monté sur une jante standardisée et est gonflé à une pression interne standardisée ; et la portion formant bande de roulement (2) est amenée en contact avec une surface plate sous un angle de cambrure de 0,
    une pluralité de rainures circonférentielles (8) situées entre la première extrémité de bande de roulement (Te1) et la seconde extrémité de bande de roulement (Te2) et s'étendant en continu dans une direction circonférentielle du pneumatique, et
    une pluralité de portions en relief (9) délimitées par la pluralité de rainures circonférentielles (8),

    la pluralité de rainures circonférentielles (8) incluent une première rainure circonférentielle d'épaulement (16) située de manière à être la plus proche de la première extrémité de bande de roulement (Te1),
    la pluralité de portions en relief (9) incluent une première portion en relief d'épaulement (11) délimitée sur un côté extérieur dans une direction axiale du pneumatique relativement à la première rainure circonférentielle d'épaulement (16),
    la première portion en relief d'épaulement (11) inclut
    une première couche de caoutchouc (21) formant une surface de bande de roulement (11s) s'étendant depuis la première extrémité de bande de roulement (Te1) jusqu'à la première rainure circonférentielle d'épaulement (16), et
    une seconde couche de caoutchouc (22) disposée sur un côté intérieur dans une direction radiale du pneumatique relativement à la première couche de caoutchouc (21) et formée à partir d'un matériau de caoutchouc différent d'un matériau de caoutchouc de la première couche de caoutchouc (21),
    **caractérisé en ce que**
    un rapport SH/SW d'une hauteur de section transversale SH du pneumatique (1) sur une largeur de section transversale SW du pneumatique (1) est de 0,30 à 0,45,
    un rapport RW/SW d'une largeur de jante RW de la jante (R) sur la largeur de section transversale SW du pneumatique (1) est de 0,78 à 0,99,
    une largeur W1 [mm] dans la direction axiale du pneumatique de la surface de bande de roulement (11s) de la première portion en relief d'épaulement (11) satisfait à l'expression (1) ci-dessous, et
    la largeur W1 [mm], une épaisseur T1 [mm] de la première couche de caoutchouc (21), une épaisseur T2 [mm] de la seconde couche de caoutchouc (22), une tangente de perte $\tan\delta 1$ à 30 °C de la première couche de caoutchouc, et une tangente de perte $\tan\delta 2$ à 70 °C de la seconde couche de caoutchouc (22) satisfont à l'expression (2) ci-dessous,

    $$W1 > 0{,}001 \times (SW \times SH) \quad \bullet\bullet\bullet \ (1)$$

    $$W1 \times (T1 \times \tan\delta 1 + T2 \times \tan\delta 2)/(T1 + T2) \leq 4 \quad \bullet\bullet\bullet \ (2),$$

    où les valeurs de W1, SW, SH, T1 et T2 qu'il s'agit d'insérer dans les équations (1) et (2) sont mesurées en millimètres.

2.  Bandage pneumatique (1) selon la revendication 1, dans lequel la largeur W1 [mm] satisfait à l'expression (3) ci-dessous,

$$W1<0{,}002\times(SW\times SH)\ \bullet\bullet\bullet\ (3),$$

où les valeurs de W1, SW et SH qu'il s'agit d'insérer dans l'équation (3) sont mesurées en millimètres.

3. Bandage pneumatique (1) selon la revendication 1 ou 2, dans lequel la largeur W1 [mm], l'épaisseur T1 [mm] de la première couche de caoutchouc (21), l'épaisseur T2 [mm] de la seconde couche de caoutchouc (22), la tangente de perte $\tan\delta1$ à 30 °C de la première couche de caoutchouc, et la tangente de perte $\tan\delta2$ à 70 °C de la seconde couche de caoutchouc (22) satisfont à l'expression (4) ci-dessous,

$$W1\times(T1\times\tan\delta1+T2\times\tan\delta2)/(T1+T2)\geq3\ \bullet\bullet\bullet\ (4),$$

où les valeurs de W1, T1 et T2 qu'il s'agit d'insérer dans l'équation (4) sont mesurées en millimètres.

4. Bandage pneumatique (1) selon l'une quelconque des revendications 1 à 3, dans lequel l'épaisseur T1 [mm] n'est pas inférieure à 0,9 fois une profondeur D1 [mm] de la première rainure circonférentielle d'épaulement (16).

5. Bandage pneumatique (1) selon la revendication 4, dans lequel l'épaisseur T1 [mm] n'est pas supérieure à 1,5 fois la profondeur D1 [mm].

6. Bandage pneumatique (1) selon l'une quelconque des revendications 1 à 5, dans lequel la première portion en relief d'épaulement (11) a un profil incurvé (25) s'étendant depuis la première rainure circonférentielle d'épaulement (16) jusqu'à une position au-delà de la première extrémité de bande de roulement (Te1).

7. Bandage pneumatique (1) selon la revendication 6, dans lequel le profil incurvé (25) a, au niveau de la première extrémité de bande de roulement (Te1), un rayon de courbure Rt [mm] qui n'est pas inférieur à 0,3 fois la largeur W1 [mm].

8. Bandage pneumatique (1) selon la revendication 6 ou 7, dans lequel le rayon de courbure Rt [mm] n'est pas supérieur à 2,0 fois la largeur W1 [mm].

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021075088 A
- JP 2023102627 A
- WO 2020158265 A1
- WO 2019216323 A1
- DE 102011001133 A1
- WO 2017116393 A1